# EUROPÄISCHE PATENTSCHRIFT

(11) **EP 2 572 428 B1**
(45) Veröffentlichungstag und Bekanntmachung des Hinweises auf die Patenterteilung: **01.03.2017**
(21) Anmeldenummer: 11718660.1
(22) Anmeldetag: 21.04.2011
(51) Int. Cl.: H02M 7/217, H02J 5/00, H02M 7/48

(54) **ANORDNUNG UND VERFAHREN ZUM BETREIBEN EINER ANORDNUNG ZUR INDUKTIVEN ENERGIEÜBERTRAGUNG AN EINEN ELEKTRISCHEN VERBRAUCHER**
ASSEMBLY AND METHOD FOR OPERATING AN ASSEMBLY FOR THE INDUCTIVE ENERGY TRANSMISSION TO AN ELECTRICAL CONSUMER
DISPOSITIF ET PROCÉDÉ POUR FAIRE FONCTIONNER UN DISPOSITIF DE TRANSMISSION INDUCTIVE D'ÉNERGIE À UN RÉCEPTEUR ÉLECTRIQUE

(30) Priorität: 20.05.2010 DE 102010022143
(43) Veröffentlichungstag der Anmeldung: 27.03.2013
(60) Teilanmeldung: 15002406.5
(73) Patentinhaber: Sew-Eurodrive GmbH & Co. KG, 76646 Bruchsal (DE)
(72) Erfinder: PODBIELSKI, Leobald, 76199 Karlsruhe (DE); KUHFUß, Valentin, 76297 Stutensee (DE); SCHMIDT, Josef, 76676 Graben-Neudorf (DE)
(74) Vertreter: Tüngler, Eberhard
(86) Internationale Anmeldenummer: PCT/EP2011/002041
(87) Internationale Veröffentlichungsnummer: WO 2011/144289

(56) Entgegenhaltungen:
- WO-A1-2010/035321
- JP-A- 6 151 088
- JP-A- 10 225 129
- JP-A- 2001 357 992
- JP-A- 2009 268 323
- US-A- 5 644 598
- US-A- 5 978 242

## Beschreibung

Die Erfindung betrifft eine Anordnung und ein Verfahren zum Betreiben einer Anordnung zur induktiven Energieübertragung an einen elektrischen Verbraucher.

Es ist bekannt, einen Verbraucher resonant induktiv zu versorgen.

Aus der US 5 978 242 A1 ist ein AC/DC-Konverter bekannt, bei dem ein Hochsetzsteller aus einem Schwingkreis versorgt ist.

Der Erfindung liegt daher die Aufgabe zugrunde, eine Anordnung zum Betreiben einer Anordnung zur induktiven Energieübertragung an einen elektrischen Verbraucher weiterzubilden, wobei der Wirkungsgrad verbessert werden soll, insbesondere im Dauerbetrieb und unter wechselhaften Einflüssen und Belastungen.

Erfindungsgemäß wird die Aufgabe bei der Anordnung nach den in Anspruch 1 angegebenen Merkmalen gelöst.

Wichtige Merkmale der Erfindung bei der Anordnung zur induktiven Energieübertragung an einen elektrischen Verbraucher sind, dass eine Sekundärwicklung induktiv gekoppelt ist mit einem Primärleiter,
wobei zur Bildung eines Schwingkreises der Sekundärwicklung eine Anordnung von Kapazitäten zugeschaltet ist,
wobei mindestens eine der Kapazitäten mit einem zugeordneten, steuerbaren Halbleiterschalter zuschaltbar oder wegschaltbar ist, insbesondere also für den Schwingkreis wirksam oder unwirksam machbar ist,
insbesondere zum Abstimmen der Resonanzfrequenz des Schwingkreises auf eine Sollfrequenz, insbesondere auf eine Frequenz des in den Primärleiter eingeprägten Stromes.

Von Vorteil ist dabei, dass auch während des Betriebs ein Abstimmen der Resonanzfrequenz des Schwingkreises auf die Frequenz des Primärleiterstroms ermöglicht ist. Somit sind Toleranzen oder Änderungen der Werte der Kapazität oder Induktivität des Schwingkreises ausgleichbar. Beispielsweise werden die Werte verändert durch Temperaturänderungen während des Betriebs oder andere Einflüsse, die im Betrieb der die Anordnung umfassenden Anlage auftreten. Ein Abstimmen ist somit beispielsweise auch in regelmäßigen zeitlichen Abständen sinnvoll. Der Abstimmvorgang ist beispielsweise einleitbar durch ein Startsignal einer übergeordneten Steuerung, wobei der Zeitpunkt des Startsignales derart gewählt ist, dass keine Störung des sonstigen Betriebes ausgelöst wird. Denn für die Zeitdauer des Abstimmens ist keine Energie an den Verbraucher zur Verfügung stellbar, weil der Schwingkreis in den unbelasteten Zustand gebracht wird.

Vorzugsweise ist die Zeitdauer für das Abstimmen derart klein gewählt, dass die vorhandenen Energiepuffer zur Versorgung des Verbrauchers in der Lage sind. Die Energiepuffer umfassen zumindest auch die Mittel zur Glättung der Ausgangsspannung des Gleichrichters.

Mittels der Erfindung ist also auch ein automatisches Abstimmen ausführbar, das von einer Steuerelektronik veranlasst und durchgeführt wird.

Bei einer vorteilhaften Ausgestaltung ist der Primärleiter mit einem mittelfrequenten Strom beaufschlagt, insbesondere der eine Frequenz zwischen 10 und 500 kHz aufweist. Von Vorteil ist dabei, dass ein hoher Wirkungsgrad erzielbar ist und mittels aufmodulierter Stromanteile, welche höher frequent sind, also in einem Frequenzband liegen, das beabstandet ist vom für den Primärleiterstrom verwendeten Frequenzband, eine Datenübertragung ohne zusätzliche Sende- und Empfangsmittel ermöglicht ist.

Bei einer vorteilhaften Ausgestaltung ist der Sekundärwicklung die Anordnung von Kapazitäten parallel oder in Reihe zugeschaltet. Von Vorteil ist dabei, dass die Erfindung in verschiedenen Ausführungsformen des Schwingkreises anwendbar ist.

Bei einer vorteilhaften Ausgestaltung ist die Anordnung von Kapazitäten als eine Parallelschaltung der Kapazitäten oder eine Reihenschaltung der Kapazitäten ausgeführt. Von Vorteil ist dabei, dass bei Zuschaltung aller Kapazitäten eine hohe oder niedrige Ersatz-Kapazität der Anordnung zusammenstellbar ist

Bei einer vorteilhaften Ausgestaltung ist der Schwingkreis ein Parallelschwingkreis oder ein Reihenschwingkreis. Von Vorteil ist dabei, dass verschieden große Spannungen bei den verschiedenen Ausführungen des Schwingkreises auftreten, jedoch in jeder Ausführungsform die Erfindung anwendbar ist, also ein Abstimmen des Schwingkreises auf die Primärleiterstromfrequenz zur Leistungsübertragung ermöglicht ist.

Bei einer vorteilhaften Ausgestaltung ist der Schwingkreis mit Sekundärwicklung und Kapazitäten derart dimensioniert und die Kapazitäten sind derart wirksam oder unwirksam gemacht, dass die zugehörige Resonanzfrequenz der wirksamen Komponenten des Schwingkreises im Wesentlichen der Mittelfrequenz des in den Primärleiter eingeprägten Stromes entspricht. Von Vorteil ist dabei, dass auch bei schwacher Kopplung ein hoher Wirkungsgrad bei der Energieübertragung erzielbar ist.

Bei einer vorteilhaften Ausgestaltung ist der elektrische Verbraucher zusammen mit dem Schwingkreis auf einem relativ zum Primärleiter bewegbar angeordneten Anlagenteil, insbesondere Fahrzeug, angeordnet,
insbesondere wobei der Verbraucher der elektrische Antrieb des Anlagenteils ist. Von Vorteil ist dabei, dass die Energie verschleißfrei an den bewegbar angeordneten Verbraucher übertragbar ist.

Bei einer vorteilhaften Ausgestaltung ist die dem steuerbaren Halbleiterschalter zugeordnete Kapazität diesem parallel oder in Reihe zugeschaltet. Von Vorteil ist dabei, dass die Kapazität zuschaltbar oder wegschaltbar ist, also wirksam oder unwirksam machbar ist.

Bei einer vorteilhaften Ausgestaltung ist die Anordnung der Kapazitäten eine Reihenschaltung oder eine Parallelschaltung der Kapazitäten. Von Vorteil ist dabei, dass bei der Reihenschaltung ein engerer Frequenzbereich fein abstimmbar ist im Vergleich zur Parallelschaltung und bei der Parallelschaltung ein weiterer Frequenzbereich im Vergleich zur Reihenschaltung abstimmbar ist

Bei einer vorteilhaften Ausgestaltung ist aus dem Schwingkreis die Eingangsseite eines Spartransformators versorgt, dessen Ausgangsseite einen Gleichrichter versorgt, aus dem über Mittel zur Glättung ein Verbraucher versorgbar ist. Von Vorteil ist dabei, dass die Ausgangsspannung regelbar ist, indem der Primärstrom des Spartransformators getaktet gesteuert wird und somit sekundärseitig der Spannungswert auf einen Sollwert hin regelbar ist.

Bei einer vorteilhaften Ausgestaltung ist der Eingangsseite des Spartransformators ein steuerbarer Schalter parallel oder in Reihe zugeschaltet, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird. Von Vorteil ist dabei, dass eine gewünschte Spannung zur Verfügung stellbar ist auch bei schwankender magnetischer Kopplung zwischen Sekundärwicklung und in der Anlage stationär verlegtem Primärleiter.

Wichtige Merkmale bei dem Verfahren zum Betreiben einer Anordnung sind, dass in einem ersten Schritt die Ausgangsseite des Schwingkreises weggeschaltet wird, insbesondere indem bei Ausführung als Reihenschwingkreis die Ausgangsseite kurzgeschlossen wird und bei Ausführung als Parallelschwingkreis abgetrennt wird,
in einem zweiten Schritt die Phasendifferenz zwischen dem durch die Sekundärspule fließenden Strom und der an der Sekundärspule anliegenden Spannung bestimmt wird,
in einem dritten Schritt die Ausgangsseite wieder zugeschaltet wird. Von Vorteil ist dabei, dass ein Abstimmen der Resonanzfrequenz automatisiert ausführbar ist.

Bei einer vorteilhaften Ausgestaltung werden der oder die Schalter derart angesteuert, dass mittels der zugehörigen Kapazität oder Kapazitäten die Resonanzgüte und/oder die Resonanzfrequenz des Schwingkreises verbessert oder auf einen Sollwert hin gesteuert wird, insbesondere in diskreter Weise. Von Vorteil ist dabei, dass

Bei einer vorteilhaften Ausgestaltung wird der der Eingangsseite des Spartransformators zugeschaltete Schalter derart getaktet betrieben und/oder das Taktsignal derart gestellt, dass die dem Verbraucher zur Verfügung gestellte Ausgangsspannung oder der dem Verbraucher zur Verfügung gestellte Ausgangsstrom auf einen Sollwert hin geregelt wird. Von Vorteil ist dabei, dass ein benötigter Strom bereit stellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erste erfindungsgemäße Anordnung schematisch dargestellt, wobei eine Reihenschaltung von steuerbaren Schaltern AC-S2 bis AC-S4 vorgesehen ist.

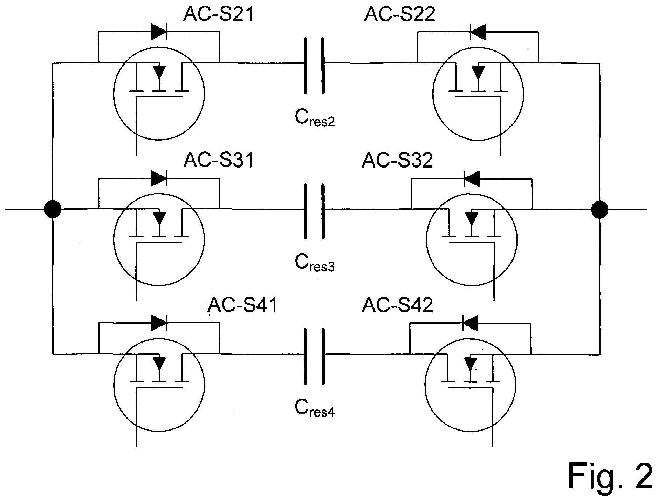

In Figur 2 ist ein alternatives erfindungsgemäßes Ausführungsbeispiel gezeigt, bei dem statt der Reihenschaltung eine Parallelschaltung verwendet ist.

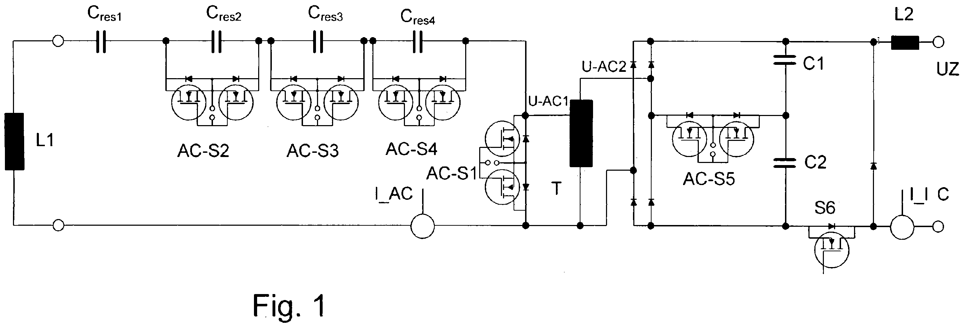

Wie in Figur 1 dargestellt, wird eine Sekundärwicklung L1 mit einer Kapazität C_res1 in Reihe geschaltet.

Innerhalb einer in Figur 1 nicht gezeigten Anlage ist als Primärleiter ein langgestreckter Linienleiter verlegt, der mit einem mittelfrequenten Wechselstrom beaufschlagt wird. Die Sekundärwicklung L1 ist induktiv an diesen Primärleiter gekoppelt vorgesehen und an einem entlang dem Primärleiter verfahrbaren Fahrzeug angeordnet. Vorzugsweise ist das Fahrzeug schienengeführt und der Primärleiter entlang der Schienen verlegt.

Der Kapazität C_res1 ist eine Reihenschaltung von weiteren Kapazitäten ( C_res2, C_res2, C_res3 ) in Reihe zugeschaltet, wobei jeder dieser Kapazitäten ( C_res2, C_res2, C_res3 ) ein jeweiliger steuerbarer Halbleiterschalter ( AC-S2, AC-S3, AC-S4 ) parallel zugeschaltet, so dass durch Öffnen des jeweiligen Schalters die jeweils parallel geschaltete Kapazität wirksam wird und durch Schließen des Schalters unwirksam.

Auf diese Weise ist ein Feinabgleich des aus der Sekundärwicklung L1 und den Kapazitäten bestehenden Reihen-Schwingkreises ermöglicht. Hierbei ist C_res1 derart dimensioniert, dass mittels Zuschalten oder Kurzschließen der Kapazitäten ( C_res2, C_res2, C_res3 ) ein feines Anpassen der Resonanzfrequenz beziehungsweise auch der Resonanzgüte ermöglicht ist.

Statt der gezeigten drei Kapazitäten ( C_res2, C_res2, C_res3 ) mit den zugehörigen Schaltern sind auch eine größere Anzahl von solchen in Reihe geschalteten Kapazitäten mit wiederum zugehörigen Schaltern, die zur jeweiligen Kapazität parallel zuschaltbar sind, vorsehbar und somit ein noch feinerer Abgleich und/oder ein weiterer Anpassungsbereich ermöglicht.

Die Ausgangsspannung U_AC1 des Reihenschwingkreises wird einem Spartransformator T zugeführt, wobei jedoch ein steuerbarer Halbleiterschalter AC-S1 zum Kurzschließen dieses Ausgangs des Schwingkreises ebenfalls vorgesehen ist.

Zum automatischen Abgleich des Schwingkreises ist in Figur 1 wird nämlich zunächst der Schalter AC-S1 kurzgeschlossen, so dass aus der Sekundärwicklung L1 und der Reihenschaltung der Kapazitäten ein unbelasteter Parallelschwingkreis gebildet ist. Schon beim Aufschwingen der ersten Schwingungsperiode ist anhand der Hochlaufkurve, also dem zeitlichen Verlauf von Strom I_AC und an der Sekundärwicklung anliegender Spannung, ein Bestimmen der Phasenlage und Resonanzgüte des Schwingkreises ausführbar. Dabei ist die Phasendifferenz der an der Sekundärwicklung L1 auftretenden Spannung zum erfassten Strom I_AC bestimmbar, insbesondere ohne Beeinflussung durch eine aus dem Schwingkreis zu versorgende Last. Mittels Hinzuschalten oder Wegschalten der Kapazitäten ( C_res2, C_res2, C_res3 ) ist ein Hinregeln auf die gewünschte Resonanzgüte und Phasenverschiebung ausführbar.

Mittels Betätigung der Schalter ( AC-S2, AC-S3, AC-S4 ) wird der Feinabgleich ausgeführt, so dass die Phasenlage und gegebenenfalls auch die Resonanzgüte möglichst nahe an ihren optimalen Sollwert geführt wird.

Bei geöffnetem Schalter AC-S1 wird Energiefluss an den Spartransformator T geführt, dessen Ausgangsstrom einem Brücken-Gleichrichter zugeführt wird. Zwischen einem Brückenpunkt des Gleichrichters und einem Brückenpunkt einer Reihenschaltung von zwei Kapazitäten C1 und C2 ist ein weiterer steuerbarer Schalter AC-S1 vorgesehen, so dass der AC-S1 Spannungswert der gleichgerichteten Spannung vom Schaltzustand des Schalters AC-S1 abhängt.

Aus der gleichgerichteten Spannung ist ein Verbraucher versorgbar, wobei ein Schalter S6 zum Zuschalten beziehungsweise Abschalten vorgesehen ist. Der an den Verbraucher geführte Strom I_DC wird über eine Induktivität L2 geführt und somit weiter geglättet. Dieser Strom I_DC wird erfasst und ist als Eingangswert, insbesondere Istwert, eines Reglers verwendbar.

Die gleichgerichtete und geglättete Ausgangsspannung UZ wird ebenfalls erfasst und ist ebenso als Eingangswert, insbesondere Istwert, eines Reglers verwendbar.

Mittels des getakteten Betriebs des Schalters AC-S1 ist ein Aufwärtswandlerbetrieb ausführbar. Somit ist als Stellgröße des Reglers die Taktperiode des getakteten Signals, oder beispielsweise das Pulsweitenverhältnis eines pulsweitenmodulierten Signals zur Ansteuerung des Schalters AC-S1 verwendbar.

Da die Schalter als steuerbare Halbleiterschalter ausgeführt sind, ist ein einfaches und schnelles Schalten mittels einer Ansteuerelektronik ermöglicht.

Insbesondere bei schwacher induktiver Kopplung zwischen Primärleiter und Sekundärwicklung und/oder abgesenktem Primärleiterstrom ist mittels des getakteten Betriebs eine ausreichend hohe Zwischenkreisspannung, also gleichgerichtete Spannung Uz, herstellbar.

In einem weiteren erfindungsgemäßen Ausführungsbeispiel werden die Schalter ( AC-S2, AC-S3, AC-S4 ) getaktet betrieben, insbesondere bei einem Winkel betätigt

### Bezugszeichenliste

- L1: Sekundärwicklung
- L2: Induktivität
- C1: Kapazität
- C2: Kapazität
- T: Spartrafo, Spartransformator

- AC-S1: steuerbarer Halbleiterschalter
- AC-S2: steuerbarer Halbleiterschalter
- AC-S3: steuerbarer Halbleiterschalter
- AC-S4: steuerbarer Halbleiterschalter
- AC-S5: steuerbarer Halbleiterschalter
- S6: steuerbarer Halbleiterschalter

- C_res1: Kapazität
- C_res2: Kapazität
- C res3: Kapazität
- C_res4: Kapazität
- C_res5: Kapazität

- I_AC: Strom im Resonanzschwingkreis
- I_DC: unipolarer Ausgangsstrom

- UZ: unipolare Zwischenkreisspannung

## Patentansprüche

1. Anordnung zur induktiven Energieübertragung an einen elektrischen Verbraucher,
wobei eine Sekundärwicklung (L1) induktiv gekoppelt ist mit einem Primärleiter,
wobei zur Bildung eines Schwingkreises der Sekundärwicklung (L1) eine Anordnung von Kapazitäten (C_res2, C_res3, C_res4) zugeschaltet ist,
**dadurch gekennzeichnet, dass**
die Kapazitäten (C_res2, C_res3, C_res4) mit einem jeweils einer Kapazität ( C_res2, C_res3, C_res4 ) parallelgeschalteten steuerbaren Halbleiterschalter (AC-S2, AC-S3, AC-S4) jieweils zuschaltbar oder jewells wegschaltbar sind,
insbesondere also für den Schwingkreis wirksam oder unwirksam machbar sind, insbesondere zum Abstimmen der Resonanzfrequenz des Schwingkreises auf eine Sollfrequenz, insbesondere auf eine Frequenz des in den Primärleiter eingeprägten Stromes, wobei die Anordnung von Kapazitäten (C_res2, C_res3, C_res4) als eine Reihenschaltung der Kapazitäten (C_res2, C_res3, C_res4) ausgeführt ist, wobei die Kapazitäten (C res2, C_res3, C res4) mit dem jeweils parallelgeschalteten steuerbaren Halbleiterschalter (AC-S2, AC-S3, AC-S4) kurzschließbar sind, insbesondere wobei aus dem Schwingkreis eine Hochsetzstelleranordnung mit Gleichrichteranordnung versorgt ist, deren Ausgangsspannung einen Verbraucher speist.

2. Anordnung nach mindestens einem der vorangegangenen Ansprüche,
**dadurch gekennzeichnet, dass**
der Primärleiter mit einem mittelfrequenten Strom beaufschlagt ist, insbesondere der eine Frequenz zwischen 10 und 500 kHz aufweist.

3. Anordnung nach mindestens einem der vorangegangenen Ansprüche,
**dadurch gekennzeichnet, dass**
der Sekundärwicklung (L1) die Anordnung von Kapazitäten (C_res2, C_res3, C_res4) in Reihe zugeschaltet ist.

4. Anordnung nach mindestens einem der vorangegangenen Ansprüche,
**dadurch gekennzeichnet, dass**
die Anordnung von Kapazitäten (C_res2, C_res3, C_res4) als eine Parallelschaltung der Kapazitäten (C_res2, C_res3, C_res4) oder eine Reihenschaltung der Kapazitäten (C_res2, C_res3, C_res4) ausgeführt ist.

5. Anordnung nach Anspruch 4,
**dadurch gekennzeichnet, dass**
der Schwingkreis ein Parallelschwingkreis oder ein Reihenschwingkreis ist.

6. Anordnung nach mindestens einem der vorangegangenen Ansprüche,
**dadurch gekennzeichnet, dass**
der Schwingkreis mit Sekundärwicklung (L1) und Kapazitäten (C_res2, C_res3, C_res4) derart dimensioniert ist und die Kapazitäten (C_res2, C_res3, C_res4) derart wirksam oder unwirksam gemacht sind, dass die zugehörige Resonanzfrequenz im Wesentlichen der Mittelfrequenz des in den Primärleiter eingeprägten Stromes entspricht.

7. Anordnung nach mindestens einem der vorangegangenen Ansprüche,
**dadurch gekennzeichnet, dass**
der elektrische Verbraucher zusammen mit dem Schwingkreis auf einem relativ zum Primärleiter bewegbar angeordneten Anlagenteil, insbesondere Fahrzeug, angeordnet ist, insbesondere wobei der Verbraucher der elektrische Antrieb des Anlagenteils ist.

8. Anordnung nach mindestens einem der vorangegangenen Ansprüche,
**dadurch gekennzeichnet, dass**
die dem steuerbaren Halbleiterschalter (AC-S2, AC-S3, AC-S4) zugeordnete Kapazität diesem parallel oder in Reihe zugeschaltet ist.

9. Anordnung nach mindestens einem der vorangegangenen Ansprüche,
**dadurch gekennzeichnet, dass**
aus dem Schwingkreis die Eingangsseite eines Spartransformators (T) versorgt ist, dessen Ausgangsseite einen Gleichrichter versorgt, aus dem über Mittel zur Glättung ein Verbraucher versorgbar ist.

10. Anordnung nach mindestens einem der vorangegangenen Ansprüche,
**dadurch gekennzeichnet, dass**
der Eingangsseite des Spartransformators (T) ein steuerbarer Schalter parallel oder in Reihe zugeschaltet ist, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird.

## Claims

1. Arrangement for inductive energy transmission to an electrical load,
wherein a secondary winding (L1) is inductively coupled to a primary conductor,
wherein to form a resonant circuit an arrangement of capacitors (C_res2, C_res3, C_res4) is connected to the secondary winding (L1),
**characterised in that**
the capacitors (C_res2, C_res3, C_res4) are respectively connectable or respectively disconnectable with a controllable semiconductor switch (AC-S2, AC-S3, AC-S4) connected in parallel with respectively one capacitor (C_res2, C_res3, C-_res4),
in particular therefore can be made active or inactive for the resonant circuit,
in particular for tuning the resonant frequency of the resonant circuit to a target frequency, in particular to a frequency of the current applied to the primary conductor,
wherein the arrangement of capacitors (C_res2, C_res3, C_res4) is configured as a series connection of the capacitors (C_res2, C_res3, C_res4),
wherein the capacitors (C_res2, C_res3, C_res4) are short-circuitable with the respectively controllable semiconductor switch (AC-S2, AC-S3, AC-S4) connected in parallel,
in particular wherein a boost converter arrangement with rectifier arrangement is supplied from the resonant circuit, the output voltage of which arrangement supplies a load.

2. Arrangement according to at least one of the preceding claims,
**characterised in that**
the primary conductor is supplied with a medium-frequency current, in particular which has a frequency between 10 and 500 kHz.

3. Arrangement according to at least one of the preceding claims,
**characterised in that**
the arrangement of capacitors (C_res2, C_res3, C_res4) is connected in series with the secondary winding (L1).

4. Arrangement according to at least one of the preceding claims,
**characterised in that**
the arrangement of capacitors (C_res2, C_res3, C_res4) is configured as a parallel connection of the capacitors (C_res2, C_res3, C_res4) or a series connection of the capacitors (C_res2, C_res3, C_res4).

5. Arrangement according to claim 4,
**characterised in that**
the resonant circuit is a parallel resonant circuit or a series resonant circuit.

6. Arrangement according to at least one of the preceding claims,
**characterised in that**
the resonant circuit with secondary winding (L1) and capacitors (C_res2, C_res3, C_res4) is dimensioned in such a manner and the capacitors (C_res2, C_res3, C_res4) made effective or ineffective in such a manner that the associated resonant frequency corresponds substantially to the medium frequency of the current applied to the primary conductor.

7. Arrangement according to at least one of the preceding claims,
**characterised in that**
the electrical load together with the resonant circuit is arranged on a system part, in particular vehicle, arranged movably relative to the primary conductor,
in particular wherein the load is the electric drive of the system part.

8. Arrangement according to at least one of the preceding claims,
**characterised in that**
the capacitor assigned to the controllable semiconductor switch (AC-S2, AC-S3, AC-S4) is connected in parallel or in series with this switch.

9. Arrangement according to at least one of the preceding claims,
**characterised in that**
from the resonant circuit the input side of an autotransformer (T) is supplied, the output side of which supplies a rectifier, from which a load is suppliable via means for smoothing.

10. Arrangement according to at least one of the preceding claims,
**characterised in that**
a controllable switch is connected in parallel or in series with the input side of the autotransformer (T), so that by means of clocked control of this switch the output voltage is regulatable to a target value, in particular wherein the control signal, in particular its frequency and/or pulse width modulation ratio, is control variable of a regulator, to which the detected output voltage value is supplied as instantaneous value.

## Revendications

1. Dispositif pour la transmission inductive d'énergie à un consommateur électrique,
sachant qu'un bobinage secondaire (L1) est couplé de façon inductive à un conducteur primaire,
sachant qu'un ensemble de condensateurs (C_res2, C_res3, C_res4) est mis en circuit afin de former un circuit oscillant du bobinage secondaire (L1),
**caractérisé en ce que** les condensateurs (C_res2, C_res3, C_res4) peuvent être respectivement mis en circuit ou respectivement mis hors circuit avec un commutateur à semi-conducteurs asservissable (AC-S2, AC-S3, AC-S4) respectivement monté en parallèle avec un condensateur (C_res2, C_res3, C_res4),
en particulier donc peuvent être rendus actifs ou inactifs pour le circuit oscillant, notamment pour le réglage de la fréquence de résonance du circuit oscillant à une fréquence de consigne, en particulier à une fréquence du courant injecté dans le conducteur primaire,
sachant que l'ensemble de condensateurs (C_res2, C_res3, C_res4) est réalisé sous la forme d'un montage en série des condensateurs (C_res2, C_res3, C_res4),
sachant que les condensateurs (C_res2, C_res3, C_res4) peuvent être mis en court-circuit avec le commutateur à semi-conducteurs asservissable (AC-S2, AC-S3, AC-S4) respectivement monté en parallèle,
sachant notamment que le circuit oscillant alimente un ensemble hacheur élévateur doté d'un ensemble redresseur dont la tension de sortie alimente un consommateur.

2. Dispositif selon la revendication 1, **caractérisé en ce que** le conducteur primaire est alimenté avec un courant à moyenne fréquence, en particulier qui présente une fréquence comprise entre 10 et 500 kHz.

3. Dispositif selon au moins une des revendications précédentes, **caractérisé en ce que** l'ensemble de condensateurs (C_res2, C_res3, C_res4) est mis en circuit en série avec le bobinage secondaire (L1).

4. Dispositif selon au moins une des revendications précédentes, **caractérisé en ce que** l'ensemble de condensateurs (C_res2, C_res3, C_res4) est réalisé sous la forme d'un montage en parallèle des condensateurs (C_res2, C_res3, C_res4) ou d'un montage en série des condensateurs (C_res2, C_res3, C_res4).

5. Dispositif selon la revendication 4, **caractérisé en ce que** le circuit oscillant est un circuit oscillant parallèle ou un circuit oscillant série.

6. Dispositif selon au moins une des revendications précédentes, **caractérisé en ce que** le circuit oscillant avec le bobinage secondaire (L1) et les condensateurs (C_res2, C_res3, C_res4) est dimensionné de telle sorte, et les condensateurs (C_res2, C_res3, C_res4) sont rendus actifs ou inactifs de telle sorte, que la fréquence de résonance associée correspond pour l'essentiel à la fréquence moyenne du courant injecté dans le conducteur primaire.

7. Dispositif selon au moins une des revendications précédentes, **caractérisé en ce que** le consommateur électrique est disposé conjointement avec le circuit oscillant sur une partie d'installation disposée à déplacement par rapport au conducteur primaire, en particulier sur un véhicule,
sachant notamment que le consommateur est l'entraînement électrique de la partie d'intallation.

8. Dispositif selon au moins une des revendications précédentes, **caractérisé en ce que** le condensateur associé au commutateur à semi-conducteurs asservissable (AC-S2, AC-S3, AC-S4) est mis en circuit en parallèle ou en série avec ce dernier.

9. Dispositif selon au moins une des revendications précédentes, **caractérisé en ce que** le circuit oscillant alimente le côté d'entrée d'un autotransformateur (T), dont le côté de sortie alimente un redresseur à partir duquel un consommateur peut être alimenté via des moyens de lissage.

10. Dispositif selon au moins une des revendications précédentes, **caractérisé en ce qu'**un commutateur asservissable est mis en circuit en parallèle ou en série avec le côté d'entrée de l'autotransformateur (T), de sorte qu'on peut réguler la tension de sortie vers une valeur de consigne au moyen de l'asservissement cadencé de ce commutateur, sachant notamment que le signal d'asservissement, en particulier sa fréquence et/ou son taux de modulation de largeur d'impulsions, est la grandeur réglante d'un régulateur auquel est apportée comme valeur effective la valeur enregistrée de la tension de sortie.
